Europäisches Patentamt

European Patent Office

Office européen des brevets

(19)

(11) Veröffentlichungsnummer : **0 204 729**
**B1**

(12) EUROPÄISCHE PATENTSCHRIFT

(45) Veröffentlichungstag der Patentschrift :
24.01.90

(51) Int. Cl.⁵ : **G 03 B 23/02**, G 09 F 11/30

(21) Anmeldenummer : 85905628.5

(22) Anmeldetag : 12.11.85

(86) Internationale Anmeldenummer :
PCT/EP 85/00610

(87) Internationale Veröffentlichungsnummer :
WO/8603024 (22.05.86 Gazette 86/11)

(54) VORRICHTUNG ZUM ZYKLISCHEN UMSCHICHTEN EINES BLATTSTAPELS.

(30) Priorität : 13.11.84 DE 3441464

(43) Veröffentlichungstag der Anmeldung :
17.12.86 Patentblatt 86/51

(45) Bekanntmachung des Hinweises auf die Patenterteilung : 24.01.90 Patentblatt 90/04

(84) Benannte Vertragsstaaten :
AT BE CH DE FR GB IT LI NL SE

(56) Entgegenhaltungen :
EP-A- 0 085 186
EP-A- 0 113 057
US-A- 4 245 417

(73) Patentinhaber : Licinvest AG
Hartbertstrasse 9
CH-7002 Chur (CH)

(72) Erfinder : ACKERET, Peter
Allmendstrasse 18
CH-8700 Küsnacht (CH)

(74) Vertreter : Röhl, Wolf Horst, Dipl.-Phys., Dr. et al
Dipl.-Ing. K. Sparing Dipl.-Phys. Dr. W.H. Röhl Rethelstrasse 123
D-4000 Düsseldorf 1 (DE)

## Beschreibung

Die Erfindung betrifft eine Vorrichtung zum zyklischen Umschichten eines Blattstapels. Eine derartige Vorrichtung ist in der US-PS 4 245 417 beschrieben und dargestellt; sie weist die im Oberbegriff der Ansprüche 1 und 8 genannten Merkmale auf.

Die bekannte Vorrichtung umfaßt ein Gehäuse mit einem Sichtfenster und einen aus dem Gehäuse in einer Richtung parallel zu der von dem Fenster definierten Ebene herausziehbaren und wieder in das Gehäuse einschiebbaren Schieber. Ein Blattwechselmechanismus sorgt dafür, daß ein Blatt des Stapels, z. B. das dem Sichtfenster abliegende Blatt, im Gehäuse zurückbleibt, wenn der Schieber herausgezogen wird, und dem Stapel beim Schiebereinschub auf der andern Seite wieder zugefügt wird. Ein manuell betätigbares Organ ist vorgesehen, um den Blattwechselmechanismus auszuschalten, derart, daß der Schieber dann den gesamten Stapel aus dem Gehäuse heraustransportiert, so daß z. B. der Stapel ausgetauscht werden kann.

Die inaktivierbaren Blattwechselmechanismen sind relativ aufwendig und ermöglichen nicht in jedem Fall einen zuverlässigen Blattwechsel, wenn sie aktiviert sind.

Aufgabe der Erfindung ist es, einen Blattwechsler der eingangs genannten Gattung zu schaffen, bei dem die Entnahme des im Gehäuse zurückgebliebenen Blattes in einfacher Weise erfolgt, jedoch der Blattwechselmechanismus nicht mehr zwischen aktiv und inaktiv umgeschaltet werden muß.

Bei einer ersten bevorzugten Lösung gemäß Patentanspruch 1 ist die Anordnung so getroffen, daß bei mehr als einem im Wechsler befindlichen Blatt dieser stets « wechselt », also ein Blatt stets im Gehäuse zurückbleibt. Nimmt man jedoch den Reststapel aus dem gezogenen Schieber heraus, so wird beim nochmaligen Einschub des Schiebers das im Gehäuse verbliebene Blatt von diesem beim Wiederausziehen mitgenommen und kann aus ihm entnommen werden.

Bei einer zweiten bevorzugten Lösung gemäß Patentanspruch 8 bestehen diese Mittel in einem « Hilfsschieber », der bei gezogenem Schieber in derselben Richtung betätigbar ist, und das zurückgebliebene Blatt dem Stapel « hinterherschiebt ».

Die beigefügten Zeichnungen stellen Ausführungsbeispiele der Erfindung in weitgehend schematisierter Form dar. Hinsichtlich der konstruktiven Einzelheiten eines kompletten Blattwechslers kann der Fachmann auf die eingangs genannte Druckschrift zurückgreifen, auf deren Ausführungsbeispiele die vorliegende Erfindung dann übertragbar ist.

Die beigefügten Zeichnungen zeigen :

Fig. 1 im weitgehend schematisierten Längsschnitt eine erste Ausführungsform, wobei der Schieber in das Gehäuse eingeschoben ist,

Fig. 2 in weitgehend schematisiertem Teilhorizontalschnitt die erste Ausführungsform,

Fig. 3 einen Querschnitt durch den Separatorsteg aus Fig. 2,

Fig. 4 in einer Ausschnittdarstellung ähnlich Fig. 1 eine weitere Ausführungsform, und

Fig. 5 in Unteransicht,

Fig. 6 im Längsschnitt ähnlich Fig. 1 eine letzte Ausführungsform.

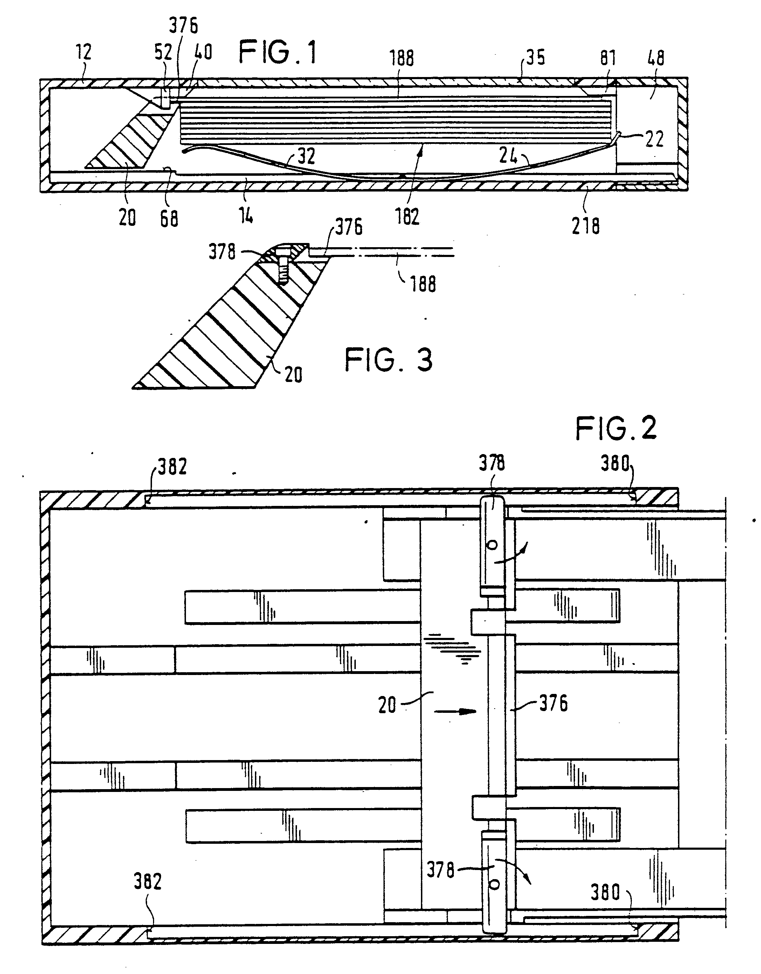

In Fig. 1 umfaßt die Vorrichtung ein Gehäuse 12, an dessen Boden 218 ein Andruckfedersystem mit einem ersten Federarmpaar 24 und einem zweiten Federarmpaar 32 befestigt ist, welches einen Stapel 182 gegen ein Sichtfenster 35 drückt. Der Schieber ist im wesentlichen rahmenförmig mit einer ein Griffstück 48 umfassenden Frontwand, von der aus sich zwei Holme L-förmigen Querschnitts in das Gehäuse 12 erstrecken, nahe deren inneren Enden sie durch einen quer verlaufenden Separatorsteg 20 verbunden sind. Im Gehäuse ist ein Mitnehmer vorgesehen, hier in Form eines Hakens 22 am Ende des Federarms 24. Wird der Schieber 14 herausgezogen, so drückt die abwärts gekehrte Schrägfläche des Separatorstegs die an ihm anliegenden Kanten des Stapels 182 nach unten unter Auslenkung der Federarme 32, bis sich das unterste Blatt des Stapels hinter eine Stufe 68 legt, deren Höhe so auf die Dicke der Blätter abgestimmt ist, daß gerade ein maximal dickes Blatt dahinter bündig liegt. Bei weiterem Schieberauszug schiebt dann der Separator den auf den Schieberholmen liegenden Stapel 182 längs der Oberseite dieses einen Blattes 188, das deshalb nicht mitgenommen wird, weil der Separatorsteg 20 an seiner Kante nicht angreift und weil es im übrigen durch die Haken 22 an den Federarmen 24 gebremst wird. Der Schieber kann soweit herausgezogen werden, daß die in Fig. 1 rechte Kante des Blattes 188 links vom Schieber liegt und von (nicht gezeigten) Mitteln gehoben wird. Schiebt man nun den Schieber zurück, gleitet diese Blattkante längs des schrägen Rückens des Separatorstegs nach oben, über den Separatorsteg und unter Niederhalterippen 40, wobei das Blatt sich mit seiner gegenüberliegenden Kante an gehäusefesten Anschlägen 52 abstützt. Wenn der Schieber ganz eingeschoben ist, legt sich dieses Blatt oben auf den Stapel, dessen in Fig. 1 rechtes Ende von Rippen 81 auf dasselbe Niveau gedrückt wird, das von den Rippen 40 definiert ist.

Diese Bauart entspricht mit geringfügigen Abweichungen, die im Rahmen der vorliegenden Erfindung ohne Belang sind, der aus der eingangs genannten Druckschrift bekannten Konstruktion.

Aus der obigen Beschreibung ergibt sich, daß zunächst keine Möglichkeit besteht, nach Entnehmen des Reststapels aus dem herausgezogenen Schieber 14 auch noch das letzte Blatt aus dem Gehäuse herauszuholen.

Deshalb ist hier nahe der Oberseite des Separatorstegs 20 eine Stufe 376 vorgesehen, die eine Höhe etwa gleich der maximalen Blattdicke besitzt. Auf dieser Stufe bleibt beim normalen Wechselbetrieb die Kante des zuletzt auf den Stapel geförderten Blattes liegen. Am Separatorsteg sind beidseits der Stufe Abwerfhebel 378 angeordnet, schwenkbar gelagert um zur Auszugsrichtung des Schiebers senkrechte Zapfen. Die in Fig. 2 dargestellte Position erreichen diese Hebel dadurch, daß sie beim Einschieben des Schiebers auf am Gehäuse 12 vorgesehene Anschläge 382 auflaufen. Zieht man den Schieber nun wieder heraus, so laufen die Hebelarme auf weitere Anschläge 380 des Gehäuses und werden dabei um einen kleinen Winkel verschwenkt, der aber ausreicht, die auf der Stufe liegende Blattkante abzuwerfen. Das Einzelblatt kann jetzt entnommen werden, denn erst ein schon von der Stufe abgeworfenes Blatt kann mittels des Mitnehmers 22 vor dem unteren Durchlaß des Separatorstegs gehalten werden. Solange also mindestens zwei Blätter den Stapel bilden, wird die Wechselfunktion ausgeführt; besteht der « Stapel » nur aus einem Blatt, wird dies bei jedem zweiten Wechselzyklus mittels des Schiebers aus dem Gehäuse heraustransportiert.

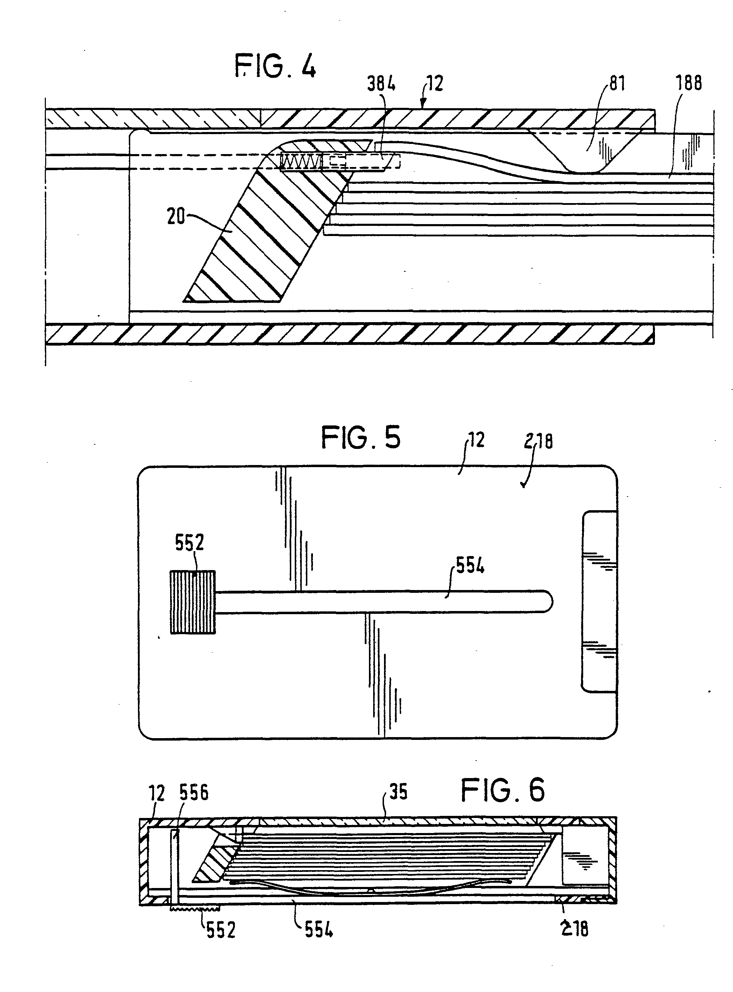

Fig. 4 zeigt eine alternative Gestaltung der steuerbaren Stufe:

Im Separatorsteg 20 ist gleitbeweglich ein Abstützelement 384 aufgenommen, das von einer (nicht gezeigten) Feder in die dargestellte Position gedrückt ist und nur bei voll ausgezogenem Schieber durch Auflaufen auf gehäuseseitige Anschläge soweit zurückgeschoben wird, daß die Kante des Blattes 188 herunterfällt oder, genauer gesagt, von Niederhaltern 81 unter das Niveau der Unterseite des Abstützelements 384 gedrückt wird. Im übrigen liegt dieser Variante dasselbe Konzept zugrunde wie der ersten Ausführungsform.

Fig. 5 und 6 zeigen eine Ausführungsform, deren Wechselfunktion der des ersten Ausführungsbeispiels im wesentlichen entspricht und deshalb hier nicht nochmals wiederholt wird. Hier weist allerdings der Separatorsteg 20 keine Stufe auf, sondern einen glatten keilförmigen Verlauf wie bei den Blattwechslern nach dem Stand der Technik. Wenn nun ein Stapelaustausch erfolgen soll, wird das im Gehäuse 12 zurückbleibende Blatt mittels eines Hilfsschiebers 552, der längs einer Führung 554 im Boden 218 des Gehäuses 12 beweglich ist, dem Schieber « nachgeschoben », wobei das Einzelblatt über den Separatorsteg 20 gleitet und sich auf den im Schieber befindlichen Stapel legt, der natürlich auch schon vorher entnommen worden sein kann.

## Patentansprüche

1. Vorrichtung zum zyklischen Umschichten eines Blattstapels (182) mit einem ein Sichtfenster (35) aufweisenden Gehäuse (12), einem parallel zu dem Fenster aus dem Gehäuse herausziehbaren und wieder einschiebbaren Schieber (14), und mit einem Blattwechselmechanismus, umfassend einen Einzelblattmitnehmer (22) am Gehäuse und einen Reststapelmitnehmer (20) am Schieber in Form eines Separatorsteges mit einem Durchlaßspalt für das abzutrennende Einzelblatt, sowie mit Mitteln zum Entnehmen aller Blätter des Stapels aus der Vorrichtung, dadurch gekennzeichnet, daß nach Entnahme des Reststapels aus dem herausgezogenen Schieber das im Gehäuse zurückgebliebene Einzelblatt (188) nach erneutem Einschub des Schiebers einem am Schieber vorgesehenen Mitnehmerorgan (376, 378, 384) zugeführt wird, das beim erneuten Herausziehen des Schiebers den Zugang des Einzelblattes zum Abtrennspalt verhindert, so daß es vom Schieber zur Entnahme mitgenommen wird.

2. Vorrichtung nach Anspruch 1, dadurch gekennzeichnet, daß der Separatorsteg (20) das Mitnehmerorgan (376, 378, 384) aufweist.

3. Vorrichtung nach Anspruch 1 oder 2, dadurch gekennzeichnet, daß das Mitnehmerorgan (376, 378, 384) bei herausgezogenem Schieber (14) inaktiviert ist.

4. Vorrichtung nach Anspruch 2, dadurch gekennzeichnet, daß der Separatorsteg (20) eine Stufe (376, 384) zum Auffangen einer Blattkante aufweist und daß Mittel (378) vorgesehen sind zum Abwerfen des Blattes von der Stufe in der herausgezogenen Position des Schiebers (14).

5. Vorrichtung nach Anspruch 4, gekennzeichnet durch mindestens einen Abwerfhebel (378), der durch Auflauf an gehäuseseitigen Anschlägen (380, 382) gesteuert ist.

6. Vorrichtung nach Ansprüchen 2, 3 und 4, dadurch gekennzeichnet, daß die Stufe an einem Abstützelement (384) vorgesehen ist, das durch Auflaufen auf gehäuseseitige Anschläge in den Separator (20) zurückziehbar ist.

7. Vorrichtung nach einem der vorangehenden Ansprüche, dadurch gekennzeichnet, daß der Separatorsteg (20) einen Abzugs- und einen Rückführspalt für das Einzelblatt (188) begrenzt und daß das Mitnehmerorgan (376, 378, 384) auf der dem Reststapel zugekehrten Seite des Separatorstegs zwischen den genannten Spalten vorgesehen ist.

8. Vorrichtung zum zyklischen Umschichten eines Blattstapels mit einem ein Sichtfenster (35) aufweisenden Gehäuse (12), einem parallel zu dem Fenster durch eine Gehäuseöffnung herausziehbaren und wieder einschiebbaren Schieber sowie mit einem Blattwechselmechanismus, mittels dem ein Einzelblatt des Stapels im Gehäuse zurückgehalten wird, während der Schieber den Reststapel aus dem Gehäuse heraustransportiert, sowie mit Mitteln zum Entnehmen aller Blätter des Stapels aus der Vorrichtung, dadurch gekennzeichnet, daß die Mittel ein Einzelblatt-Förderorgan (552, 556) umfassen, das im Gehäuse in Richtung der Schieberbewegung manuell verlagerbar ist und dabei das im Gehäuse zurückgehaltene Einzelblatt zur Entnahme aus dem Schieber durch die Gehäuseöffnung fördert.

9. Vorrichtung nach Anspruch 8, dadurch gekennzeichnet, daß das Förderorgan (552, 556) an der Kante des Einzelblattes angreifend ausgebildet und angeordnet ist, die der Gehäuseöffnung abgekehrt ist.

10. Vorrichtung nach Anspruch 9, dadurch gekennzeichnet, daß das Förderorgan ein die Stapeldicke überbrückender Hilfsschieber ist.

11. Vorrichtung nach Anspruch 10, dadurch gekennzeichnet, daß der Hilfsschieber (552, 556) in einem dem Sichtfenster (35) gegenüberliegenden Gehäuseboden geführt ist.

12. Vorrichtung nach Anspruch 11, dadurch gekennzeichnet, daß der Hilfsschieber eine von außen zugängliche Betätigungstaste (552) aufweist.

13. Vorrichtung nach Anspruch 8, bei der der Schieber einen als Reststapelmitnehmer dienenden Separatorsteg aufweist, dadurch gekennzeichnet, daß das Förderorgan (552, 556) in seiner Ruheposition außerhalb des vom Separatorsteg während der Schieberbewegung durchlaufenen Raumes angeordnet ist.

## Claims

1. Device for the cyclic rearrangement of a pile (182) of sheets having a housing (12) with a viewing window (35) and a slider member (14) that can be pulled out of the housing and pushed back into the housing again parallel to the window, and having a sheet-changing mechanism comprising a transporter (22) for an individual sheet on the housing and a transporter (20) for the remainder of the pile on the slider member in the form of a separator bar having a through gap for the individual sheet to be separated, and having means for removing all the sheets in the pile from the device, characterised in that once the remainder of the pile has been removed from the pulled-out slider member the individual sheet (188) remaining in the housing is, once the slider member has been pushed in again, fed to a transporter member (376, 378, 384) provided on the slider member which transporter member prevents the individual sheet from approaching the separating gap when the slider member is pulled out again, with the result that the individual sheet is transported by the slider member for removal.

2. Device according to claim 1, characterised in that the separator bar (20) has the transporter member (376, 378, 384).

3. Device according to claim 1 or 2, characterised in that the transporter member (376, 378, 384) is inactivated when the slider member (14) is pulled out.

4. Device according to claim 2, characterised in that the separator bar (20) has a stepped member (376, 384) for catching a sheet edge and that means (378) are provided for throwing off the sheet from the stepped member when the slider member (14) is in the pulled-out position.

5. Device according to claim 4, characterised by at least one throw-off lever (378) that is actuated by running up against stops (380, 382) on the housing side.

6. Device according to claims 2, 3 and 4, characterised in that the stepped member is provided on a support element (384) which can be pulled back into the separator (20) by running up against stops on the housing side.

7. Device according to any one of the preceding claims, characterised in that the separator bar (20) defines a separator gap and a return gap for the individual sheet (188) and that the transporter member (376, 378, 384) is provided on that side of the separator bar that faces the remainder of the pile, between the mentioned gaps.

8. Device for the cyclic rearrangement of a pile of sheets having a housing (12) with a viewing window (35) and a slider member that can be pulled out through an opening in the housing and pushed back in again through the opening in the housing, parallel to the window, and having a sheet-changing mechanism by means of which an individual sheet in the pile is retained in the housing while the slider member transports the remainder of the pile out of the housing, and means for removing all the sheets in the pile out of the device, characterised in that the means comprise an advancer member (552, 556) for the individual sheet, which member can be displaced manually in the housing in the direction of movement of the slider member and in the process advances the individual sheet retained in the housing through the opening in the housing for removal from the slider member.

9. Device according to claim 8, characterised in that the advancer member (552, 556) is designed to act on that edge of the individual sheet that faces away from the opening in the housing and is arranged on that edge.

10. Device according to claim 9, characterised in that the advancer member is an auxiliary slider member that spans the thickness of the pile.

11. Device according to claim 10, characterised in that the auxiliary slider member (552, 556) is guided in a housing floor opposite the viewing window (35).

12. Device according to claim 11, characterised in that the auxiliary slider member has an actuating button (552) that is accessible from outside.

13. Device according to claim 8 in which the slider member has a separator bar serving as a transporter for the remainder of the pile, characterised in that in its rest position the advancer member (552, 556) is arranged outside the space through which the separator bar passes during the movement of the slider member.

## Revendications

1. Dispositif de reclassement cyclique d'une pile de feuilles (182), comportant un boîtier (12) muni d'un voyant (35), un tiroir (14) pouvant être extrait du boîtier et y être réinséré, parallèlement au voyant, et un mécanisme de changement de feuilles comportant un organe (22) de prélèvement d'une feuille individuelle, installé sur le boîtier et un organe (20) d'entraînement de la pile restante, installé sur le tiroir et réalise sous la forme d'une barrette formant séparateur et comportant une fente de passage pour la feuille individuelle devant être séparée, ainsi que des moyens pour prélever toutes les feuilles de la pile hors du dispositif, caractérisé en ce qu'après le prélèvement de la pile restante hors du tiroir ressorti, la feuille individuelle (188) restant dans le boîtier est amenée, après une nouvelle insertion du tiroir, à un organe d'entraînement (376, 378, 384), qui est prévu sur le tiroir et, lors d'une nouvelle extraction du tiroir, empêche l'accès de la feuille individuelle à la fente de séparation, de sorte que la feuille individuelle est entraînée par le tiroir en vue de son prélèvement.

2. Dispositif selon la revendication 1, caractérisé en ce que la barrette formant séparateur (20) comporte l'organe d'entraînement (376, 378, 384).

3. Dispositif selon la revendication 1 ou 2, caractérisé en ce que l'organe d'entraînement (376, 378, 384) est inactivé lorsque le tiroir (14) est ressorti.

4. Dispositif selon la revendication 2, caractérisé en ce que la barrette formant séparateur (20) comporte une partie étagée (376, 384) servant à saisir le bord d'une feuille et en ce qu'il est prévu des moyens (378) pour dégager la feuille de la partie étagée, lorsque le tiroir (14) est dans la position ressortie.

5. Dispositif selon la revendication 4, caractérisé par au moins un levier de dégagement (378), qui est commandé par son application contre des butées (380, 382) ménagées sur les côtés du boîtier.

6. Dispositif selon les revendications 2, 3 et 4, caractérisé en ce que la partie étagée est prévue sur un élément de support (384), qui, lors du mouvement d'application contre des butées ménagées sur les côtés du boîtier, peut être rétracté dans le séparateur (20).

7. Dispositif suivant l'une des revendications précédentes, caractérisé en ce que la barrette formant séparateur (20) limite une fente d'extraction et de renvoi pour la feuille individuelle (188) et en ce que l'organe d'entraînement (376, 378, 384) est prévu sur le côté, tourné vers la pile restante, de la barrette formant séparateur entre lesdites fentes.

8. Dispositif de reclassement cyclique d'une pile de feuilles, comportant un boîtier (12) possédant un voyant (35), un tiroir pouvant être extrait à travers une ouverture du boîtier et y être à nouveau inséré, parallèlement au voyant, ainsi qu'un mécanisme de changement de feuilles, à l'aide duquel une feuille individuelle de la pile est retenue dans le boîtier, tandis que le tiroir extrait la pile restante hors du boîtier, ainsi que des moyens pour prélever toutes les feuilles de la pile à partir du dispositif, caractérisé en ce que les moyens comprennent un organe (552, 556) d'entraînement d'une feuille individuelle, qui peut être déplacé manuellement dans le boîtier dans la direction du déplacement du tiroir et entraîne la feuille individuelle retenue dans le boîtier, pour son prélèvement à partir du tiroir, à travers l'ouverture du boîtier.

9. Dispositif selon la revendication 8, caractérisé en ce que l'organe d'entraînement (552, 556) est agencé, et disposé de manière à s'accrocher au bord de la feuille individuelle, qui est tourné à l'opposé de l'ouverture du boîtier.

10. Dispositif selon la revendication 9, caractérisé en ce que l'organe d'entraînement est un tiroir auxiliaire s'étendant sur l'épaisseur de la pile.

11. Dispositif selon la revendication 10, caractérisé en ce que le tiroir auxiliaire (552, 556) est guidé dans un fond du boîtier, situé à l'opposé du voyant (35).

12. Dispositif selon la revendication 11, caractérisé en ce que le tiroir auxiliaire comporte une touche d'actionnement (552) accessible de l'extérieur.

13. Dispositif selon la revendication 8, dans lequel le tiroir comporte une barrette formant séparateur utilisée comme élément d'entraînement de la pile restante, caractérisé en ce que dans sa position de repos, l'organe d'entraînement (552, 556) est situé à l'extérieur de l'espace traversé par la barrette formant séparateur pendant le déplacement du tiroir.

FIG. 1

FIG. 3

FIG. 2

EP 0 204 729 B1

FIG. 4

FIG. 5

FIG. 6